# FASCICULE DE BREVET EUROPEEN

(11) **EP 1 045 165 B1**
(45) Date de publication et mention de la délivrance du brevet: **25.02.2004**
(21) Numéro de dépôt: 00400861.1
(22) Date de dépôt: 29.03.2000
(51) Int. Cl.: F16F 7/12

(54) **Organe absorbeur de choc et procédé de fabrication**
Stossabsorbierendes Organ und Herstellungsmethode dafür
Shock absorbing device and manufacturing process therefor

(30) Priorité: 15.04.1999 FR 9904701
(43) Date de publication de la demande: 18.10.2000
(73) Titulaire: SOLLAC, 92800 Puteaux (FR)
(72) Inventeur: Reynaert, Alain, 60290 Laigneville (FR)
(74) Mandataire: Plaisant, Sophie Marie

(56) Documents cités:
- EP-A- 0 763 448
- DE-A- 4 316 164
- DE-C- 19 542 496
- DE-U- 9 311 163
- DE-U- 29 703 843
- FR-A- 2 698 674
- GB-A- 1 279 881

## Description

L'invention concerne un organe absorbeur de choc, du type comportant deux parties alignées de forme générale tubulaire et de sections différentes reliées entre elles par une zone de jonction :
- la partie de tube dont la section est de surface plus petite formant un tube poussoir,
- la partie de tube dont la section est de surface plus grande formant un tube absorbeur par retournement de l'enveloppe de ce tube sous l'action du tube poussoir à l'endroit de la jonction, et libre coulissement autour dudit tube poussoir, ledit retournement s'amorçant à l'endroit de la zone de jonction.

Un organe absorbeur de ce type est notamment décrit dans les demandes de brevet DE-A-4 316 164, EP 0 763 448 (Hoogovens) et FR 2 698 674 (GKN - LOHR) ; ces types d'organes sont notamment montés sur des véhicules automobiles pour amortir les chocs accidentels de ces véhicules, dans des conditions d'amortissement et de décélération supportables, notamment pour les passagers.

Un avantage important des organes absorbeurs décrits dans ces documents réside dans leur compacité : l'énergie absorbée par distance de déformation est très élevée, couramment l'ordre de 1000 J pour 50 mm de déformation.

Les inconvénients des organes absorbeurs décrits dans ces documents concernent :
- les risques de voir le retournement s'amorcer en dehors de la jonction, par exemple, à l'autre extrémité du tube absorbeur ;
- un effort d'amorçage du retournement très supérieur à l'effort de poursuite du retournement, qui se traduit par un « pic » initial d'effort au commencement du choc qui provoque une décélération trop brutale et/ou dangereuse préjudiciable à un bon amortissement ;
- les risques de coincement et de blocage du coulissement du tube absorbeur avec sa partie retournée dans le tube poussoir.

Par ailleurs, les procédés de fabrication des organes absorbeurs de ce type présentent également des inconvénients :
- ces procédés sont en général coûteux, par exemple à cause de la réalisation de la jonction ;
- en partant d'un tube en acier, un procédé classique consiste à expanser le tube sur la partie de sa longueur qui correspond au tube absorbeur et cette expansion est généralement réalisée par emboutissage profond ; ce procédé impose alors d'utiliser des nuances d'acier adaptées à l'emboutissage profond, ayant en général une limite élastique Re < 300 MPa, ce qui limite les performances de l'absorbeur.

L'invention a pour but de remédier à ces inconvénients.

A cet effet, l'invention a pour objet un organe absorbeur de choc, du type comportant deux parties alignées de forme générale tubulaire et de sections différentes, reliées entre elles par une zone de jonction :
- la partie de tube dont la section est de surface plus petite formant un tube poussoir ,
- la partie de tube dont la section est de surface plus grande formant un tube absorbeur par retournement de l'enveloppe de ce tube sous l'action du tube poussoir à l'endroit de la jonction, et libre coulissement autour dudit tube poussoir, ledit retournement s'amorçant à l'endroit de la zone de jonction,
caractérisé en ce que, dans un plan de coupe quelconque passant par l'axe du tube formé par ces deux parties alignées,
- si Dp désigne le diamètre externe dudit tube poussoir et Da le diamètre externe dudit tube absorbeur,
- si Ep désigne l'épaisseur du tube poussoir et Ea l'épaisseur du tube absorbeur,
- si Rr.p est le rayon naturel externe de retournement de l'enveloppe tubulaire du tube poussoir et si Rr.a est le rayon naturel externe de retournement de l'enveloppe tubulaire du tube absorbeur,
- si ladite zone de jonction se raccorde vers l'intérieur avec ledit tube poussoir en formant un rayon externe de courbure Rp et se raccorde vers l'extérieur avec ledit tube absorbeur en formant un rayon externe de courbure Ra,
on satisfait simultanément les relations :
Ep > Ea; Rp < Rr.p; Ra > Rr.a; ½(Da - Dp) > 2 x Rr.a; Ra > Rp.

L'invention peut également présenter une ou plusieurs des caractéristiques suivantes :
- les deux parties de forme générale tubulaire et la zone de leur jonction sont essentiellement en matériau métallique, qui présente de préférence une limite élastique Re > 300 Mpa, qui peut être un acier au carbone ou un acier inoxydable.
- Rp ≤ 3 x Ep.
- Ra ≥ 5 x Ea.
- ½(Da - Dp) ≥ Ra + ½Rp.
- ½(Da - Dp) ≈ (Rp + Ra) et Ra ≈ 2 x Rr.a.
- Da ≤ 1,4 Dp.
- ledit tube poussoir comporte des nervures.

L'invention a également pour objet un procédé de fabrication d'un organe absorbeur de choc selon l'invention à partir d'un tube en matériau métallique, caractérisé en ce qu'il comporte une étape dans laquelle on expanse par hydroformage la section de ce tube sur au moins une partie de sa longueur, de manière à obtenir, sur au moins une partie de la longueur du tube, d'une part la partie de tube formant un tube poussoir, d'autre part la partie expansée formant un tube absorbeur, ces deux parties étant reliées entre elles par ladite zone de jonction.

L'invention peut également présenter une ou plusieurs des caractéristiques suivantes :
- on expanse la section de ce tube sur plusieurs parties disjointes de sa longueur.
- ledit matériau métallique présente une limite élastique Re > 300 Mpa, et peut être notamment un acier au carbone ou un acier inoxydable.

L'invention sera mieux comprise à la lecture de la description qui va suivre, donnée à titre d'exemple non limitatif, et en référence aux figures annexées sur lesquelles :
- les figures 1 à 3 sont des vues générales d'un organe absorbeur selon l'invention, ici de forme générale tubulaire cylindrique : vue perspective de dessus pour la figure 1, vue de face d'une coupe selon un plan passant par l'axe du cylindre pour la figure 2, perspective de la même coupe pour la figure 3.
- les figures 4 à 6 sont des schémas partiels de la même coupe que les figures 2 et 3, au voisinage de la zone de jonction ; les figures 4 et 5 concernent l'organe absorbeur avant déformation pour deux géométries se différenciant uniquement au niveau de la jonction ; la figure 6 concerne l'organe absorbeur après déformation.
- la figure 7 illustre les résultats obtenus dans le cas de l'exemple 1, pour un huitième de cylindre.
- les figures 8 et 9 présentent des variantes des organes absorbeurs selon l'invention, vues en perspectives partielles, dans le cas où la partie formant tube poussoir est dotée de nervures.

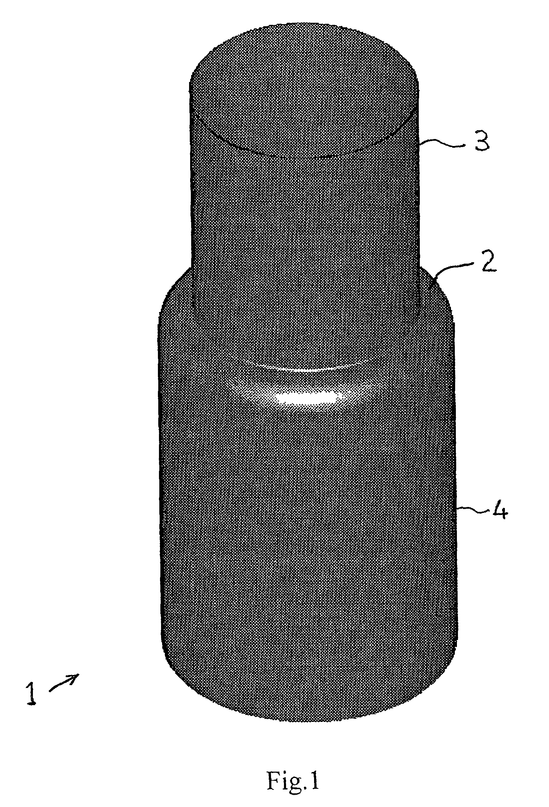

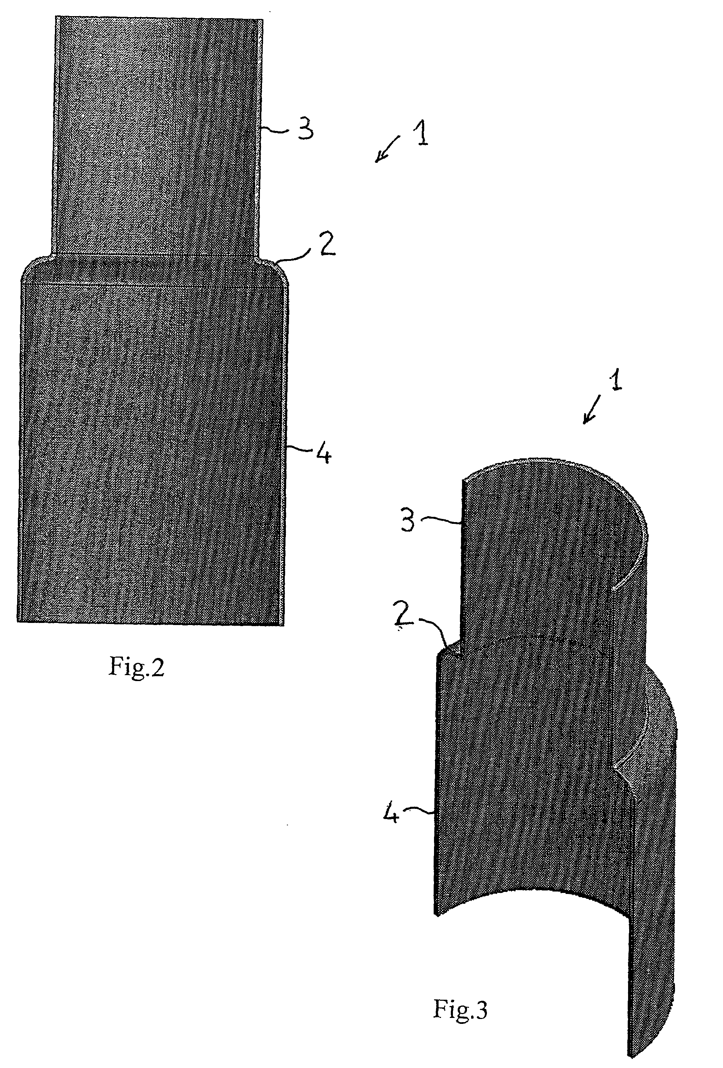

Comme représenté aux figures 1 à 3, l'organe absorbeur de choc 1, ici de section circulaire, comprend deux parties alignées de sections différentes, reliées entre elles par une zone de jonction 2 :
- la partie de tube dont la section est de surface plus petite forme un tube poussoir 3,
- la partie de tube dont la section est de surface plus grande forme un tube absorbeur 4.

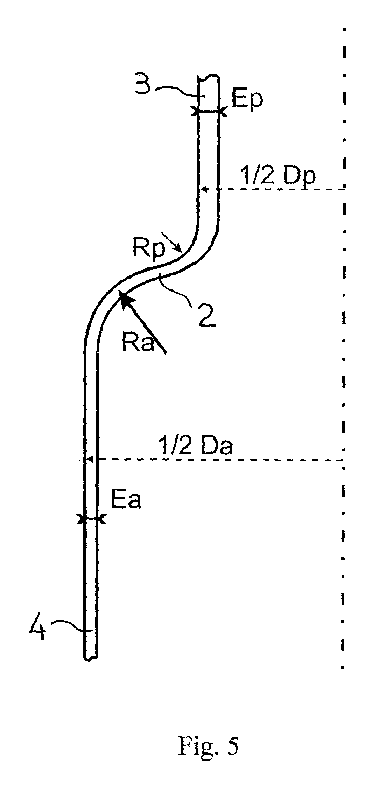

En se référant à la figure 5 qui représenfe, au voisinage de la zone de jonction, une vue détaillée d'une coupe dans un plan de coupe quelconque passant par l'axe du tube formé par les deux parties alignées, on définit les grandeurs suivantes :
- Dp désigne le diamètre externe du tube poussoir 3 et Da le diamètre externe du tube absorbeur 4,
- Ep désigne l'épaisseur du tube poussoir 3 et Ea l'épaisseur du tube absorbeur 4,
- Rr.p désigne le rayon naturel externe de retournement de l'enveloppe tubulaire du tube pousseur 3 et Rr.a le rayon naturel externe de retournement de l'enveloppe tubulaire du tube absorbeur 4,
- la zone de jonction 2 se raccorde vers l'intérieur avec le tube poussoir 3 en formant un rayon externe de courbure Rp et se raccorde vers l'extérieur avec le tube absorbeur 4 en formant un rayon externe de courbure Ra.

On entend par axe du tube, la direction du tube passant par le centre de gravité des sections de chaque partie, tube pousseur 3 et tube absorbeur 4.

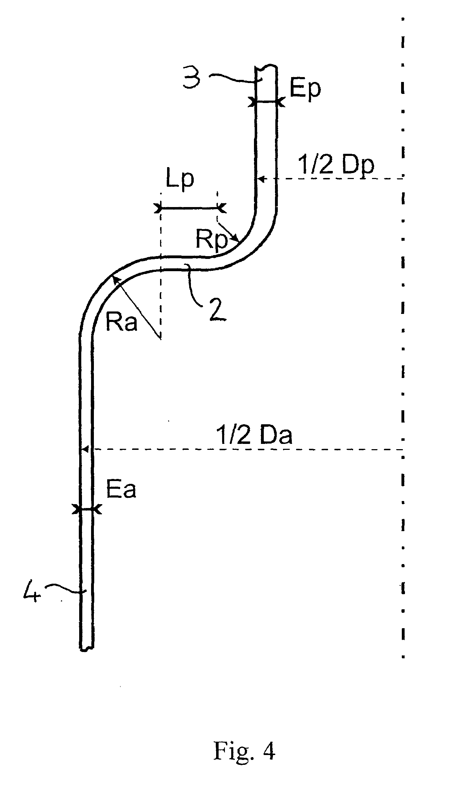

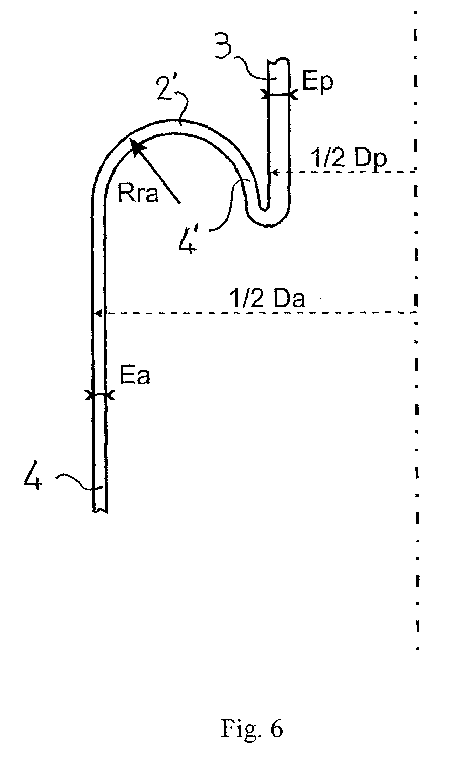

Comme représenté à la figure 6, qui représente comme les figures 4 et 5 une vue détaillée d'une coupe au voisinage de la zone de jonction 2 mais après déformation sous un choc, l'organe absorbeur 1 fonctionne par retournement de l'enveloppe du tube absorbeur 4 sous l'action du tube poussoir 3 à l'endroit de la jonction 2 ; ce retournement s'amorce à l'endroit de la zone de jonction 2' et s'opère selon un rayon de retournement Rr.a.

Selon l'invention, on satisfait simultanément les relations :
Ep > Ea; Rp < Rr.p ; Ra > Rr.a; ½(Da - Dp) > 2 x Rr.a; Ra > Rp.

Les conditions Ep > Ea , Rp < Rr.p et Ra > Rr.a garantissent la répartition des fonctions : pousseur pour le tube le plus épais (Ep > Ea) qui ne risque pas de se retourner (Rp < Rr.p), absorbeur pour le tube le plus mince destiné à se retourner (Ra > Rr.a).

La condition ½(Da - Dp) > 2 x Rr.a garantit que le diamètre interne de la partie 4' de tube absorbeur retourné (Da - 4 x Rr.a) reste bien inférieur au diamètre externe Dp du tube pousseur 3, de manière à pouvoir coulisser librement dans ce tube pousseur 3.

La condition Ra > Rp est très avantageuse, car elle permet d'amorcer convenablement le retournement de l'absorbeur 4 à l'endroit de la jonction 2.

Grâce à l'invention, on obtient un organe absorbeur de choc qui, au commencement du choc, ne subit pas d'effort initial provoquant une décélération trop forte ; on évite également les risques de coincement et de blocage du coulissement du tube poussoir 3 dans le tube absorbeur retourné 4'.

Pour obtenir de bonnes performances mécaniques, l'organe absorbeur 1 est de préférence essentiellement en matériau métallique ; cet organe peut être revêtu de matériaux non métalliques, comme de peinture, et/ou doté d'équipements en matériaux non métalliques.

Toujours dans le but d'améliorer les performances mécaniques, on choisit de préférence un matériau métallique ayant une limite élastique Re > 300 MPa.

Comme matériau métallique, on choisit par exemple un acier au carbone ou un acier inoxydable.

D'autres caractéristiques mécaniques concernant la zone de jonction sont avantageuses :
- Rp ≤ 3 x Ep.

En effet, pour des raisons géométriques évidentes, on a Rr.p > 2 x Ep ; en pratique, on a : 3 x Ep < Rr.p < 5 x Ep ; ainsi, en choisissant Rp ≤ 3 x Ep, on est donc assuré de remplir la condition Rp < Rr.p .
- Ra ≥ 5 x Ea.

En effet, pour des raisons géométriques évidentes, on a Rr.a > 2 x Ea ; en pratique, on a : 3 x Ea < Rr.a < 5 x Ea ; ainsi, en choisissant Ra ≥ 5 x Ea, on est donc assuré de remplir la condition Ra > Rr.a.
- ½(Da - Dp) ≥ Ra + ½Rp.

Cette condition supplémentaire permet de limiter les risques flambement, d'éviter l'inconvénient du pic initial d'effort de déformation de l'organe absorbeur au début du choc et permet de limiter les risques de coincement et de blocage de coulissement du tube pousseur dans le tube absorbeur en cours de retournement.
- ½(Da - Dp) ≈ (Rp + Ra) et Ra ≈ 2 x Rr.a.

Ces conditions supplémentaires permettent d'optimiser la valeur de Da notamment en vue de minimiser le poids de l'organe.
- Da ≤ 1,4 Dp.

Cette condition permet également de minimiser le poids de l'organe ; elle est particulièrement adaptée au cas de la production de l'organe absorbeur par hydroformage et le facteur 1,4 correspqnd alors à un taux d'expansion par hydroformage classiquement appliqué à des formes tubulaires en acier.

La figure 4 représente schématiquement le cas où ½(Da - Dp) > Ra + Rp, ce qui signifie que la zone de jonction 2 comprend un plateau de largeur Lp.

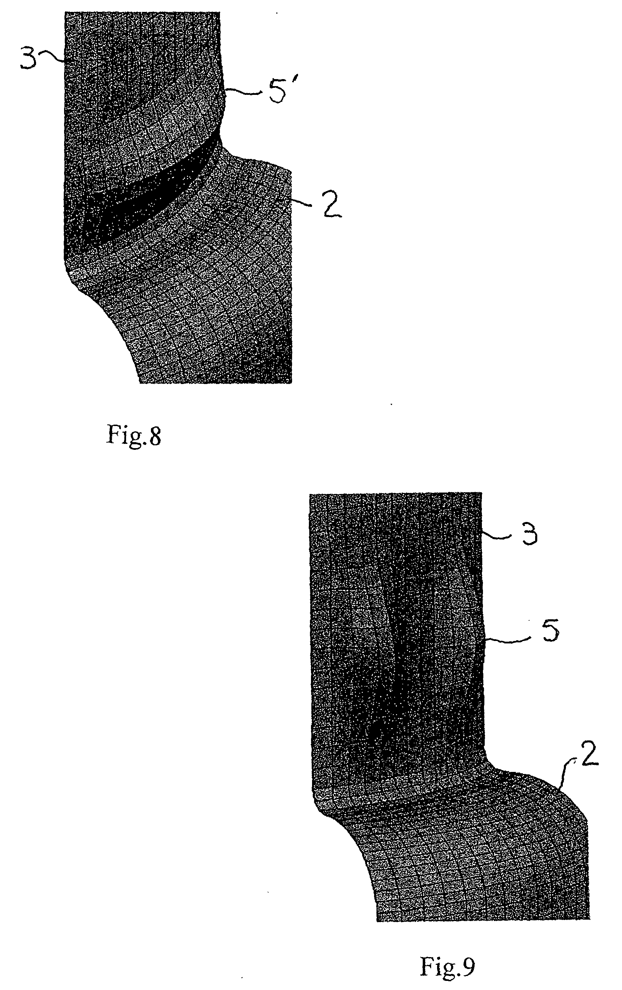

Selon une autre variante préférentielle de l'invention qui se réfère aux figures 8 et 9 qui sont des vues partielles de l'organe absorbeur au voisinage de la zone de jonction 2, le tube poussoir 3 est doté de nervures 5', 5 ; de manière surprenante, on a constaté que ces nervures avaient un effet favorable sur l'amorçage des déformations de l'organe absorbeur au niveau de la jonction ; on a obtenu cet effet quelle que soit la direction des nervures : parallèle à l'axe du tube (figure 9) ou perpendiculaire à cet axe (figure 8).

Ces nervures ont également un effet anti-flambement.

Concernant la profondeur maximale Np de ces nervures, deux cas possibles :
- soit elles s'enfoncent vers l'intérieur du tube (cas non représenté),
- soit, selon les cas représentés, elles s'étendent vers l'extérieur du tube ;
dans ce cas, il est convient que : Np < ½ (Da-Dp) - 2 Rr.a, pour ne pas freiner le coulissement du tube poussoir 3 dans le tube absorbeur retourné 4' au moment du choc.

On va maintenant décrire un procédé particulièrement avantageux pour la fabrication de l'élément absorbeur selon l'invention, dans le cas de l'utilisation d'un matériau métallique, notamment d'acier au carbone ou d'acier inoxydable.

On part d'un tube métallique présentant une longueur de section constante.

Le procédé selon l'invention comporte une étape dans laquelle on modifie par hydroformage la section du tube de départ sur au moins une partie de sa longueur, de manière à obtenir :
- d'une part, une partie de tube dont la section est de surface plus petite, formant un tube poussoir,
- d'autre part, une partie de tube expansée dont la section est de surface plus grande, formant un tube absorbeur,
ces deux parties étant reliées entre elles par une zone de jonction satisfaisant les critères géométriques de l'organe absorbeur selon l'invention.

Ce procédé de fabrication est particulièrement économique.

En pratique, dans ce procédé, l'hydroformage conduit à expanser la section du tube entre deux extrémités où l'on maintient l'étanchéité du fluide d'expansion et où la section ne varie pas ; il convient ensuite de couper le tube en deux au niveau de sa partie expansée et on obtient alors au moins un et, en général, deux organes absorbeurs selon l'invention.

Pour limiter les chutes de métal et le nombre d'opérations d'hydroformage, avantageusement, selon ce procédé, on modifie par hydroformage la section du tube de départ sur plusieurs parties disjointes de sa longueur ; en coupant ensuite le tube au niveau de chaque partie expansée, on obtient alors un nombre important d'absorbeurs en une seule opération d'hydroformage.

Grâce à l'invention, on peut utiliser des matériaux à haute résistance pour réaliser les absorbeurs de choc selon l'invention, ce qui permet de gagner encore en performances et/ou en compacité et en poids ; on utilise ainsi de préférence des matériaux dont la limite élastique Re est supérieure à 300 MPa, qui n'étaient pas utilisables facilement dans l'art antérieur, lorsqu'on expansait le tube par emboutissage profond.

De préférence, le matériau métallique utilisé est en acier au carbone ou en acier inoxydable.

Les exemples suivants illustrent l'invention.

### Exemple 1 :

Cet exemple a pour but d'illustrer les dimensions d'un organe absorbeur selon l'invention lorsqu'il est de section circulaire sur toute la longueur, dans deux cas, A et B, qui différent au niveau des épaisseurs de parois du tube.

Comme matériau, on prend un acier de nuance SOLPHASE™ 600 de la Société SOLLAC ; il s'agit d'un acier contenant deux phases métallurgiques, à fort taux de consolidation ; pour la fabrication, on procède comme décrit dans l'exemple 2, à partir d'un tube de cet acier ; d'autres procédés de fabrication décrits dans l'art antérieur peuvent être utilisés ; les caractéristiques mécaniques sur tube de départ sont : limite élastique Re = 643 MPa, limite à rupture Rm = 692 MPa.

Selon cet exemple, on prépare deux organes absorbeurs présentant des épaisseurs différentes de paroi du tube mais des dimensions externes identiques.

### Cas A : épaisseurs fortes :

- Da = 104 mm Ea = 1,8 mm Ra = 10 mm Rr.a = 4,5 mm
- Dp = 80 mm Ep = 2,1 mm Rp = 2 mm Rr.p = 5 mm

### Cas B : épaisseurs faibles :

- Da = 104 mm Ea = 1,65 mm Ra = 10 mm Rr.a = 4,3 mm
- Dp = 80 mm Ep=1,9mm Rp = 2 mm Rr.p=4,5mm

En outre la longueur de la partie de tube de section inférieure formant le tube poussoir est de 72 mm et la longueur de la partie de tube de section supérieure formant le tube absorbeur est de 100mm ; la course possible d'absoption du choc est donc de l'ordre de 150 mm.

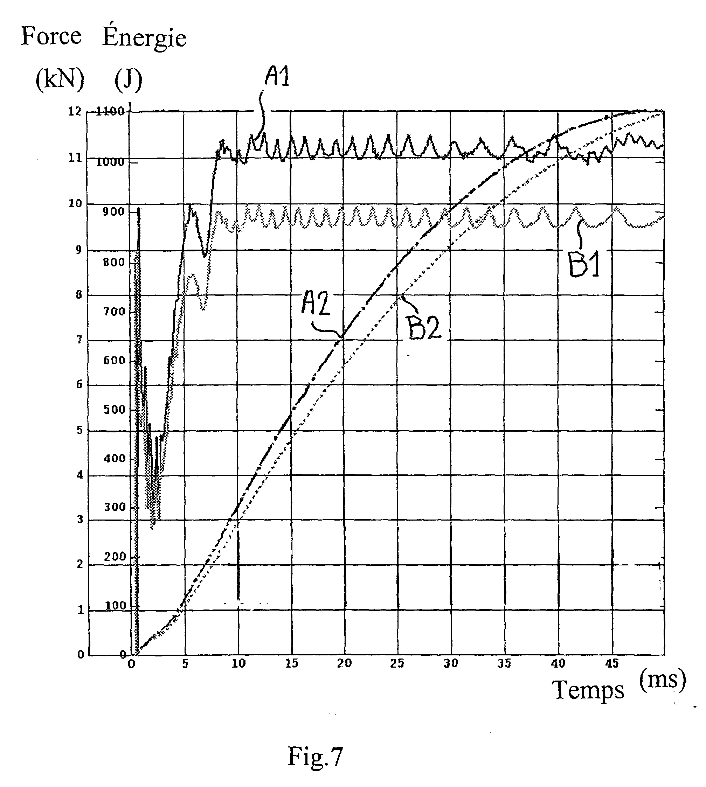

Ces deux absorbeurs sont ensuite testés en leur appliquant un choc correspondant à l'impact d'une masse de 1000 kg ayant une vitesse initiale de 15,2 km/h : on mesure la force (kN) supportée par l'absorbeur en fonction du temps (ms) et l'énergie de choc (J : joule) dissipée par la déformation de l'absorbeur en fonction du temps (ms) ; les résultats obtenus sur un huitième de cylindre sont reportés à la figure 7 : courbes A1 (force) et A2 (énergie) pour le cas A, courbes B1 (force) et B2 (énergie) pour le cas B.

Un effort de 90 kN est obtenu avec les épaisseurs de 2,1 mm sur pousseur et 1,8 mm sur partie expansée (échelle figure 7 à multiplier par 8).

Un effort de 78 kN est obtenu avec les épaisseurs de 1,9 mm sur pousseur et 1,65 mm sur partie expansée (échelle figure 7 à multiplier par 8).

On considère que les courbes d'effort (A1, B1) ne présentent pas de pic, le phénomène transitoire de début de déformation ne générant pas de décélération forte et ne pouvant pas avoir d'incidence sur la sécurité des passagers d'un véhicule doté de ces absorbeurs et soumis à ce choc.

Selon la figure 7, les courbes d'effort (A1, B1) présentent un plateau stable avec des oscillations de faible amplitude autour de la valeur moyenne ; cette forme en plateau ou palier, et la faible amplitude des oscillations sont des avantages importants pour ce type d'organe absorbeur.

### Exemple 2 :

Cet exemple a pour but d'illustrer la fabrication d'un organe absorbeur par hydroformage, présentant les mêmes dimensions externes que ceux de l'exemple 1.

On part d'un tube d'acier de diamètre externe 45 mm, d'épaisseur 1,5 mm en acier de nuance SOLPHASE™ 600, de longueur 4000 mm ; à l'aide d'une installation classique d'hydroformage, on gonfle dans une matrice la partie centrale de ce tube sur une longueur de 210 mm, en soumettant l'intérieur du tube à une pression de liquide de 90 10⁺⁶ Pa et en appliquant un effort de poussée axiale assurant l'étanchéité aux extrémités de ce tube.

Après avoir obtenu l'expansion de périmètre du tube, on coupe en deux parties d'égale longueur le tube ainsi expansé, selon un plan perpendiculaire à l'axe du tube ; on obtient alors deux organes absorbeurs, dont les parties expansées forment des tubes absorbeurs et présentent, après la diminution d'épaisseur relative à l'expansion, une épaisseur Ea = 1,35 mm, et dont les parties non expansées forment des tubes poussoirs et présentent l'épaisseur de départ Ep = 1,5 mm.

Ce procédé de fabrication d'organe absorbeur de choc selon l'invention est particulièrement économique par rapport aux procédés de l'art antérieur ; il permet d'utiliser une gamme plus large de nuances d'acier, qui n'est pas limitée à celle des aciers pour emboutissage profond comme dans l'art antérieur lorsqu'on utilise un procédé d'expansion du tube par emboutissage ; dans ce procédé par emboutissage profond, la nuance SOLPHASE 600™ n'aurait pas pu être utilisée.

### Exemple 3:

Cet exemple a pour but d'illustrer les performances qu'il est possible d'atteindre en utilisant ces nuances d'acier plus résistantes, qu'il n'était pas possible d'utiliser dans le procédé par emboutissage profond de l'art antérieur.

A partir de deux nuances d'acier différentes présentant des propriétés mécaniques (Re, Rm) différentes, on réalise deux absorbeurs selon l'exemple 1 (cas B), en procédant par hydroformage comme décrit dans l'exemple 2.

Le tableau suivant récapitule les propriétés mécaniques de ces aciers et les performances de l'absorbeur obtenues, en terme d'effort mesuré en palier (voir figure 7 où le palier est atteint après 7 à 8 ms) dans les conditions de choc des tests de l'exemple 1.

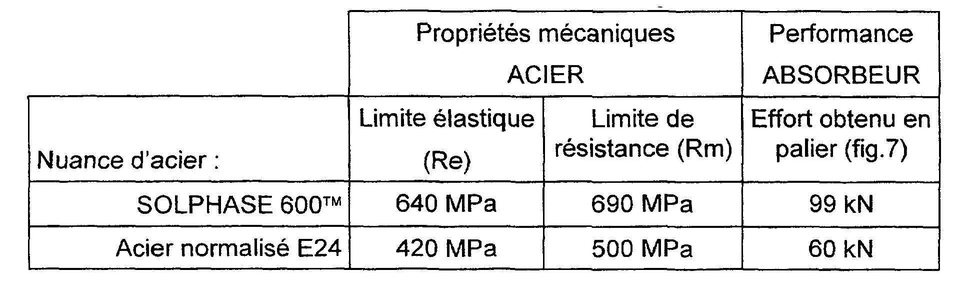

Grâce à l'utilisation de nuances d'acier adaptées, et parce qu'elles sont utilisables dans le procédé selon l'invention, on parvient ainsi à obtenir économiquement des organes absorbeurs de performances élevées.

### Exemple 4 :

Cet exemple a pour but d'illustrer les dimensions d'un organe absorbeur selon l'invention lorsque la partie formant tube absorbeur est de section elliptique ; comme la partie formant tube absorbeur présente une section de surface plus élevée que la section de l'autre partie, c'est elle qui présente l'encombrement le plus important ; le choix d'une section elliptique permet donc de réduire l'encombrement dans la direction du petit axe de l'ellipse et facilite l'intégration de l'organe, notamment sur un véhicule.

Matériau utilisé : acier nuance SOLFORM™ 550 de la Société SOLLAC ; il s'agit d'un acier laminé à chaud destiné au formage à froid, dont les caractéristiques mécaniques sont : limite d'élasticité Re comprise entre 405 et 485 MPa et limite de résistance supérieure à 540 Mpa.

On réalise l'organe absorbeur selon les dimensions suivantes :
- Dimensions dans un plan de coupe passant le grand axe de l'ellipse et l'axe du tube :
   - Da = 112 mm Ea = 1,7mm Ra = 14 mm Rr.a = 4,4 mm
   - Dp = 80 mm Ep = 2,1 mm Rp = 2 mm Rr.p = 5 mm
- Dimensions dans plan de coupe passant le petit axe de l'ellipse et l'axe du tube:
   - D'a = 100 mm E'a = 1,8 mm R'a = 8 mm R'r.a = 4,5mm
   - D'p = Dp - E'p = Ep = 2,1 mm R'p = Rp = 2 mm R'r.p = Rr.p =5mm 80mm

Les performances obtenues sont comparables à celles des absorbeurs de l'exemple 1.

### Exemple 5 :

Cet exemple a pour but d'illustrer les dimensions d'un organe absorbeur selon l'invention lorsqu'il est de section polygonale sur toute sa longueur (tube poussoir et tube absorbeur).
- Matériau : acier nuance SOLFORM™ 600, épaisseur 1,5 mm.
- Section octogonale.
- Dimensions dans le plan de coupe passant par le centre des faces, les diamètres Da et Dp étant alors inférieurs aux diamètres D'a et D'b que l'on mesurerait dans le plan de coupe passant par les sommets :
   - Da = 104 mm Ea = 1,65 mm Ra = 10 mm Rr.a = 4,3 mm
   - Dp = 80 mm Ep = 1,9 mm Rp = 2 mm Rr.p = 4,5 mm

Les rayons de raccordement Ra et Rp sont conservés constants dans tous les plans de coupe contenant l'axe du tube.

### Exemple 6 :

Cet exemple a pour but d'illustrer un organe absorbeur selon l'invention, identique à celui (cas B) de l'exemple 1 à la différence près que le tube poussoir est doté de nervures.

Cet organe absorbeur est donc toujours de forme générale tubulaire.

Comme représenté à la figure 9, huit nervures s'étendant dans la direction de l'axe du tube sont réparties sur la circonférence de la partie formant tube poussoir.

Ces nervures s'étendent dans la direction de l'axe du tube sur une longueur de 25 mm et ont une largeur maximale de l'ordre de 8 mm et une profondeur s'étendant vers l'extérieur de l'ordre de Np = 2 mm.

On constate que ces nervures ont un effet anti-flambement et, de manière surprenante, un effet favorisant l'amorçage des déformations de l'organe absorbeur lors d'un choc.

## Revendications

1. Organe absorbeur (1) de choc, du type comportant deux parties alignées de forme générale tubulaire et de sections différentes, reliées entre elles par une zone de jonction (2) :
- la partie de tube dont la section est de surface plus petite formant un tube poussoir (3),
- la partie de tube dont la section est de surface plus grande formant un tube absorbeur (4) par retournement de l'enveloppe de ce tube sous l'action du tube poussoir (3) à l'endroit de la jonction (2), et libre coulissement autour dudit tube poussoir, ledit retournement s'amorçant à l'endroit de la zone de jonction (2),
**caractérisé en ce que**, dans un plan de coupe quelconque passant par l'axe du tube formé par ces deux parties alignées,
- si Dp désigne le diamètre externe dudit tube poussoir (3) et Da le diamètre externe dudit tube absorbeur (4),
- si Ep désigne l'épaisseur du tube poussoir (3) et Ea l'épaisseur du tube absorbeur (4),
- si Rr.p est le rayon naturel externe de retournement de l'enveloppe tubulaire du tube poussoir (3) et si Rr.a est le rayon naturel externe de retournement de l'enveloppe tubulaire du tube absorbeur (4),
- si ladite zone de jonction (2) se raccorde vers l'intérieur avec ledit tube poussoir (3) en formant un rayon externe de courbure Rp et se raccorde vers l'extérieur avec ledit tube absorbeur (4) en formant un rayon externe de courbure Ra,
on satisfait simultanément les relations :
Ep > Ea ; Rp < Rr.p ; Ra > Rr.a ; ½(Da - Dp) > 2 x Rr.a ; Ra > Rp.

2. Organe selon la revendication 1 **caractérisé en ce que** les deux parties de forme générale tubulaire et la zone de leur jonction sont essentiellement en matériau métallique.

3. Organe selon la revendication 2 **caractérisé en ce que** ledit matériau métallique présente une limite élastique Re > 300 MPa.

4. Organe selon l'une quelconque des revendications 2 ou 3 **caractérisé en ce que** ledit matériau métallique est un acier au carbone.

5. Organe selon l'une quelconque des revendications 2 ou 3 **caractérisé en ce que** ledit matériau métallique est un acier inoxydable.

6. Organe selon l'une quelconque des revendications précédentes **caractérisé en ce que** Rp ≤ 3 x Ep.

7. Organe selon l'une quelconque des revendications précédentes **caractérisé en ce que** Ra ≥ 5 x Ea.

8. Organe tubulaire absorbeur de choc selon l'une quelconque des revendications précédentes **caractérisé en ce que**: ½(Da - Dp) ≥ Ra + ½Rp.

9. Organe tubulaire absorbeur de choc selon la revendication 8 **caractérisé en ce que** : ½(Da - Dp) ≈ (Rp + Ra) et Ra ≈ 2 x Rr.a.

10. Organe tubulaire absorbeur de choc selon l'une quelconque des revendications précédentes **caractérisé en ce que** : Da ≤ 1,4 Dp.

11. Organe selon l'une quelconque des revendications précédentes **caractérisé en ce que** ledit tube poussoir (3) comporte des nervures (5, 5').

12. Procédé de fabrication d'un organe absorbeur de choc selon l'une quelconque des revendications précédentes à partir d'un tube en matériau métallique, **caractérisé en ce qu'**il comporte une étape dans laquelle on expanse par hydroformage la section de ce tube sur au moins une partie de sa longueur, de manière à obtenir, sur au moins une partie de la longueur du tube, d'une part la partie de tube formant un tube poussoir (3), d'autre part la partie expansée formant un tube absorbeur (4), ces deux parties étant reliées entre elles par ladite zone de jonction (2).

13. Procédé selon la revendication 12 **caractérisé en ce qu'**on expanse la section de ce tube sur plusieurs parties disjointes de sa longueur.

14. Procédé selon l'une quelconque des revendications 12 ou 13 **caractérisé en ce que** ledit matériau métallique présente une limite élastique Re > 300 MPa.

15. Procédé selon l'une quelconque des revendications 12 à 14 **caractérisé en ce que** ledit matériau métallique est un acier au carbone.

16. Procédé selon l'une quelconque des revendications 12 à 14 **caractérisé en ce que** ledit matériau métallique est un acier inoxydable.

## Claims

1. Impact absorbing device (1) of the type comprising two aligned parts of tubular overall shape and different cross sections, joined together by a joining zone (2):
- that part of the tube which has the cross section of smaller surface area forming a plunger tube (3),
- that part of the tube which has the cross section of larger surface area forming an absorber tube (4) as the casing of this tube is turned inside out under the action of the plunger tube (3) at the region of the join (2), and free sliding around said plunger tube, said turning-inside out beginning at the region of the joining zone (2),
**characterized in that**, in any plane of section passing through the axis of the tube formed by these two aligned parts,
- if Dp refers to the outside diameter of said plunger tube (3) and Da refers to the outside diameter of said absorber tube (4),
- if Ep refers to the thickness of the plunger tube (3) and Ea refers to the thickness of the absorber tube (4),
- if Rr.p is the natural outside radius of turning-inside out of the tubular casing of the plunger tube (3) and if Rr.a is the natural outside radius of turning-inside out of the tubular casing of the absorber tube (4),
- if said joining zone (2) connects inwardly with said plunger tube (3), forming an outside radius of curvature Rp and connects outwardly with said absorber tube (4), forming an outside radius of curvature Ra,
then the following relationships are simultaneously satisfied:
Ep > Ea; Rp < Rr.p; Ra > Rr.a; ½(Da - Dp) > 2 × Rr.a; Ra > Rp.

2. Device according to claim 1, **characterized in that** the two parts of tubular overall shape and the zone in which they join are essentially made of a metallic material.

3. Device according to claim 2, **characterized in that** said metallic material has a yield stress Re > 300 MPa.

4. Device according to any one of claims 2 or 3, **characterized in that** said metallic material is a carbon steel.

5. Device according to any one of claims 2 or 3, **characterized in that** said metallic material is a stainless steel.

6. Device according to any one of the preceding claims, **characterized in that** Rp ≤ 3 × Ep.

7. Device according to any one of the preceding claims, **characterized in that** Ra ≥ 5 × Ea.

8. Tubular impact absorbing device according to any one of the preceding claims, **characterized in that**: ½(Da - Dp) ≥ Ra + ½Rp.

9. Tubular impact absorbing device according to claim 8, **characterized in that**: ½(Da - Dp) ≈ (Rp + Ra) and Ra ≈ 2 x Rr.a.

10. Tubular impact absorbing device according to any one of the preceding claims, **characterized in that**: Da ≤ 1.4 Dp.

11. Device according to any one of the preceding claims, **characterized in that** said plunger tube (3) has ribs (5, 5').

12. Method for manufacturing an impact absorbing device according to any one of the preceding claims from a tube made of a metallic material, **characterized in that** it comprises a step in which the cross section of this tube is expanded by hydroforming over at least part of its length so as to obtain, over at least part of the length of the tube, on one hand, that part of the tube which forms a plunger tube (3) and, on the other hand, the expanded part which forms an absorber tube (4), these two parts being joined together by said joining zone (2).

13. Method according to claim 12, **characterized in that** the cross section of this tube is expanded over several unconnected parts along its length.

14. Method according to any one of claims 12 or 13, **characterized in that** said metallic material has a yield stress Re > 300 MPa.

15. Method according to any one of claims 12 to 14, **characterized in that** said metallic material is a carbon steel.

16. Method according to any one of claims 12 to 14, **characterized in that** said metallic material is a stainless steel.

## Patentansprüche

1. Stoßabsorbierendes Organ (1) mit zwei fluchtenden, insgesamt röhrenförmigen Teilen mit unterschiedlichem Querschnitt, welche miteinander durch eine Verbindungsstelle (2) verbunden sind, wobei
- der Rohrabschnitt mit geringerem Flächenquerschnitt ein stoßendes Rohr (3) bildet,
- der Rohrabschnitt mit größerem Flächenquerschnitt ein absorbierendes Rohr (4) bildet, derart, dass sich die Mantelfläche dieses Rohrs unter der Wirkung des stoßenden Rohrs (3) im Bereich der Verbindungsstelle (2) überstülpt und frei um das stoßende Rohr gleitet, wobei die Überstülpung im Bereich der Verbindungsstelle (2) ansetzt,
**dadurch gekennzeichnet, dass** in einer beliebigen Schnittebene durch die Achse des durch diese zwei fluchtenden Abschnitte gebildeten Rohrs,
- wenn Dp den Außendurchmesser des stoßenden Rohrs (3) und Da den Außendurchmesser des absorbierenden Rohrs (4) bezeichnen,
- wenn Ep die Dicke des stoßenden Rohrs (3) und Ea die Dicke des absorbierenden Rohrs (4) bezeichnen,
- wenn Rr.p den natürlichen Außenradius der Überstülpung der röhrenförmigen Mantelfläche des stoßenden Rohrs (3) und Rr.a den natürlichen Außenradius der Überstülpung der röhrenförmigen Mantelfläche des absorbierenden Rohrs (4) angeben,
- wenn die Verbindungsstelle (2) sich nach innen mit dem stoßenden Rohr (3) unter Bildung eines äußeren Biegeradius Rp verbindet und sich nach außen mit dem absorbierenden Rohr (4) unter Bildung eines äußeren Biegeradius Ra verbindet,
den Beziehungen
Ep > Ea; Rp < Rr.p; Ra > Rr.a; ½(Da - Dp) > 2 x Rr.a; Ra > Rp
gleichzeitig genügt wird.

2. Organ nach Anspruch 1, **dadurch gekennzeichnet, dass** die beiden insgesamt röhrenförmigen Abschnitte und die Stelle deren Verbindung im wesentlichen aus metallischem Material bestehen.

3. Organ nach Anspruch 2, **dadurch gekennzeichnet, dass** das metallische Material eine Elastizitätsgrenze Re > 300 MPa aufweist.

4. Organ nach einem der Ansprüche 2 oder 3, **dadurch gekennzeichnet, dass** das metallische Material aus einem Kohlenstoffstahl besteht.

5. Organ nach einem der Ansprüche 2 oder 3, **dadurch gekennzeichnet, dass** das metallische Material aus einem nicht rostenden Stahl besteht.

6. Organ nach einem der vorhergehenden Ansprüche, **dadurch gekennzeichnet, dass** Rp ≤ 3 x Ep.

7. Organ nach einem der vorhergehenden Ansprüche, **dadurch gekennzeichnet, dass** Ra ≥ 5 x Ea.

8. Röhrenförmiges stoßabsorbierendes Organ nach einem der vorhergehenden Ansprüche, **dadurch gekennzeichnet, dass** ½(Da - Dp) ≥ Ra + ½Rp.

9. Röhrenförmiges stoßabsorbierendes Organ nach Anspruch 8, **dadurch gekennzeichnet, dass** ½(Da - Dp) ≈ (Rp + Ra) und Ra ≈ 2 x Rr.a.

10. Röhrenförmiges stoßabsorbierendes Organ nach einem der vorhergehenden Ansprüche, **dadurch gekennzeichnet, dass** Da ≤ 1,4 Dp.

11. Organ nach einem der vorhergehenden Ansprüche, **dadurch gekennzeichnet, dass** das stoßende Rohr (3) Rippen (5, 5') aufweist.

12. Herstellungsmethode für ein stoßabsorbierendes Organ nach einem der vorhergehenden Ansprüche mit einem Rohr aus metallischem Material, **dadurch gekennzeichnet, dass** sie einen Schritt aufweist, in dem das Rohr im Querschnitt auf mindestens einem Teil seiner Länge durch Hydroforming ausgeweitet wird, so dass auf zumindest einem Teil der Rohrlänge einerseits der ein stoßendes Rohr (3) bildende Rohrabschnitt und andererseits der ein absorbierendes Rohr (4) bildende Rohrabschnitt ausgebildet werden, wobei diese beiden Abschnitte über die Verbindungsstelle (2) miteinander verbunden sind.

13. Methode nach Anspruch 12, **dadurch gekennzeichnet, dass** das Rohr im Querschnitt auf mehreren getrennten Abschnitten seiner Länge ausgeweitet wird.

14. Methode nach einem der Ansprüche 12 oder 13, **dadurch gekennzeichnet, dass** das metallische Material eine Elastizitätsgrenze Re > 300 MPa aufweist.

15. Methode nach einem der Ansprüche 12 bis 14, **dadurch gekennzeichnet, dass** das metallische Material ein Kohlenstoffstahl ist.

16. Methode nach einem der Ansprüche 12 bis 14, **dadurch gekennzeichnet, dass** das metallische Material ein nicht rostender Stahl ist.
